# EUROPEAN PATENT APPLICATION

(11) **EP 4 063 985 A1**
(43) Date of publication of application: **28.09.2022**
(21) Application number: 22163314.2
(22) Date of filing: 21.03.2022
(51) Int. Cl.: G05D 1/00, G01S 17/66, G01S 17/89

(54) **AERIAL INSPECTION SYSTEM**

(30) Priority: 25.03.2021 JP 2021051990
(71) Applicant: TOPCON CORPORATION, Tokyo 174-8580 (JP)
(72) Inventor: ENO, Taizo, Tokyo 174-8580 (JP)
(74) Representative: Louis Pöhlau Lohrentz

(57) **Abstract**

Provided is a surveying system comprising :
- a flying vehicle system which is configured to perform a remote control and include a flying vehicle and a measuring instrument,
- a position measuring instrument configured to measure a position of the flying vehicle system, and
- a remote controller configured to control the flying of the flying vehicle system and to wirelessly communicate with the flying vehicle system and the position measuring instrument.
The remote controller is configured to fly the flying vehicle system to a desired structure, measure an object surface by the measuring instrument, and convert a measurement result of the object surface into a measurement result with reference to the position measuring instrument.

## Description

### BACKGROUND OF THE INVENTION

The present invention relates to a surveying system which measures an object by a flying vehicle while tracking the flying vehicle.

Structures such as buildings or bridges deteriorate over time, which can lead to problems, for instance, the peeling, the unevenness (irregularities), and the falling of exterior walls. Therefore, to prevent structural defects, the regular inspections or the maintenance with respect to the structure is necessary.

As a conventional structural inspection method, there is a hammering test by which a scaffold is built around a structure, or a gondola is suspended from a rooftop with ropes so that the scaffold can be secured, and a worker strikes an exterior wall with a predetermined instrument and determines the condition of the wall based on the reflected sound. Further, there is also a method by which an infrared camera is mounted on a remotely controllable flying vehicle such as a UAV, an exterior wall of a structure is photographed with the infrared camera, and the condition of the exterior wall is determined based on a temperature distribution on the wall obtained. Further, there is also a method by which an exterior wall of a structure is scanned with a three-dimensional laser scanner or three-dimensional images are acquired with a flash lidar or a TOF camera, a three-dimensional shape of a wall surface measures based on the three-dimensional images, and the condition of the exterior wall is determined based on the obtained wall surface unevenness.

In the hammering test, it is difficult to build the scaffold if there is no space around the structure or if the structure is high rise, and even if the scaffold can be built, it takes time to work. Further, the work is dangerous because the work involves working at heights in the flesh. Further, since infrared cameras have low resolutions, performing the high-performance inspection is difficult. Furthermore, in case of using a laser scanner, the scaffold is required for setting up a tripod on which the laser scanner is mounted. Further, the photographing using the flash lidar or the TOF cameras also requires a lot of space around the structure for the scaffold, and it also takes time to produce the scaffold.

### SUMMARY OF INVENTION

It is an object of the present invention to provide a surveying system which can high accurately measure a structure even in a short time.

To attain the object as described, a surveying system according to the present invention is a surveying system including a flying vehicle system which is configured to perform a remote control and include a flying vehicle and a measuring instrument, a position measuring instrument configured to measure a position of the flying vehicle system, and a remote controller configured to control a flying of the flying vehicle system and to wirelessly communicate with the flying vehicle system and the position measuring instrument, wherein the remote controller is configured to fly the flying vehicle system to a desired structure, measure an object surface by the measuring instrument, and convert a measurement result of the object surface into a measurement result with reference to the position measuring instrument.

Further, in the surveying system according to a preferred embodiment, the flying vehicle has at least three reflectors provided at known positions with respect to a reference point of the flying vehicle, the position measuring instrument includes a distance measuring module configured to project a distance measuring light, receive a reflected distance measuring light, and measure a distance to the reflectors, a distance measuring light deflector configured to deflect the distance measuring light in such a manner that a predetermined range is scanned with the distance measuring light, and an arithmetic control module configured to control the distance measuring module and the distance measuring light deflector, wherein the arithmetic control module is configured to sequentially perform a local scan including at least one of the reflectors using the distance measuring light with respect to each reflector by the distance measuring light deflector, and measure each reflector.

Further, in the surveying system according to a preferred embodiment, the position measuring instrument further includes a measuring instrument main body having the distance measuring module, the distance measuring light deflector and the arithmetic control module, and a main body driving module configured to drive the measuring instrument main body in a horizontal direction and a vertical direction, wherein the arithmetic control module is configured to determine a position of one of the reflectors measured previously as a center, sequentially perform a local scan for measuring a current position of one of the reflectors with respect to each reflector, and track the flying vehicle system.

Further, in the surveying system according to a preferred embodiment, the arithmetic control module is configured to set a position of each reflector measured at a standby position as an initial position, respectively, and start a tracking of the flying vehicle system based on a measurement result of each initial position.

Further, in the surveying system according to a preferred embodiment, the arithmetic control module is configured to calculate a plane formed by a center of each reflector and a normal line of the plane based on the measurement result of each reflector and calculate an attitude and an azimuth of the flying vehicle system based on the plane and the normal line.

Further, in the surveying system according to a preferred embodiment, the flying vehicle system further includes a flying controller, the measuring instrument is a uniaxial laser scanner, the laser scanner is configured to perform a one-dimensional scan using a distance measuring light having a wavelength different from a wavelength of the position measuring instrument via a scanning mirror, and the flying controller is configured to irradiate rotationally a three-dimension of the distance measuring light by a cooperation between a rotation of the scanning mirror and a rotation of the flying vehicle which rotates in a direction orthogonal to the scanning mirror and acquire three-dimensional point cloud data by a two-dimensional scan.

Further, in the surveying system according to a preferred embodiment, the remote controller includes a terminal storage module in which a design data having a surface shape of a normal structure is stored and a terminal arithmetic processing module, and the terminal arithmetic processing module is configured to compare the three-dimensional point cloud data acquired by the laser scanner with the design data and detect a defect position in the structure based on a comparison result.

Further, in the surveying system according to a preferred embodiment, the flying vehicle system further includes flying vehicle cameras and an infrared camera provided on a peripheral surface of the flying vehicle, and the terminal arithmetic processing module is configured to move the flying vehicle system to the defect position and acquire an image of the defect position by the flying vehicle cameras and the infrared camera.

Furthermore, in the surveying instrument according to a preferred embodiment, the plurality of flying vehicle cameras are provided, and the flying controller is configured to cause the flying vehicle cameras to acquire moving images or continuous images, extract each identical feature points in images adjacent to each other in terms of time, calculate a positional deviation between the feature points, and calculate a tilt angle, an azimuth angle, and a moving amount of the flying vehicle at the time of acquiring a subsequent image with respect to a preceding image based on the positional deviation.

According to the present invention, there is provided a surveying system including a flying vehicle system which is configured to perform a remote control and include a flying vehicle and a measuring instrument, a position measuring instrument configured to measure a position of the flying vehicle system, and a remote controller configured to control a flying of the flying vehicle system and to wirelessly communicate with the flying vehicle system and the position measuring instrument, wherein the remote controller is configured to fly the flying vehicle system to a desired structure, measure an object surface by the measuring instrument, and convert a measurement result of the object surface into a measurement result with reference to the position measuring instrument. As a result, there is no need to set up a scaffold for a worker or the measuring instrument, which can shorten a working time and improve the safety of the work.

### BRIEF DESCRIPTION OF DRAWINGS

FIG.1 is an explanatory drawing to explain a surveying system according to an embodiment of the present invention.
FIG.2 is an explanatory drawing to explain a relationship between respective reflectors in a flying vehicle system in the surveying system.
FIG.3 is a plane view to show a flying vehicle.
FIG.4 is a block diagram to show a control system of the flying vehicle system.
FIG.5 is a block diagram to show a control system of a position measuring instrument in the surveying system.
FIG.6 is a block diagram to show a control system of a remote controller in the surveying system.
FIG.7 is an explanatory drawing to explain a measuring area set in the measurement.
FIG.8 is an explanatory drawing to explain the tracking of the flying vehicle system according to the embodiment of the present invention.
FIG.9 is an explanatory drawing to explain the inspection of a structure using the surveying system.

### DETAILED DESCRIPTION OF THE PREFERRED EMBODIMENT

A description will be given below on an embodiment of the present invention by referring to the attached drawings.

The surveying system 1 is mainly included of a flying vehicle system (a UAV) 2, a position measuring instrument 3 such as a laser scanner, and a remote controller 4.

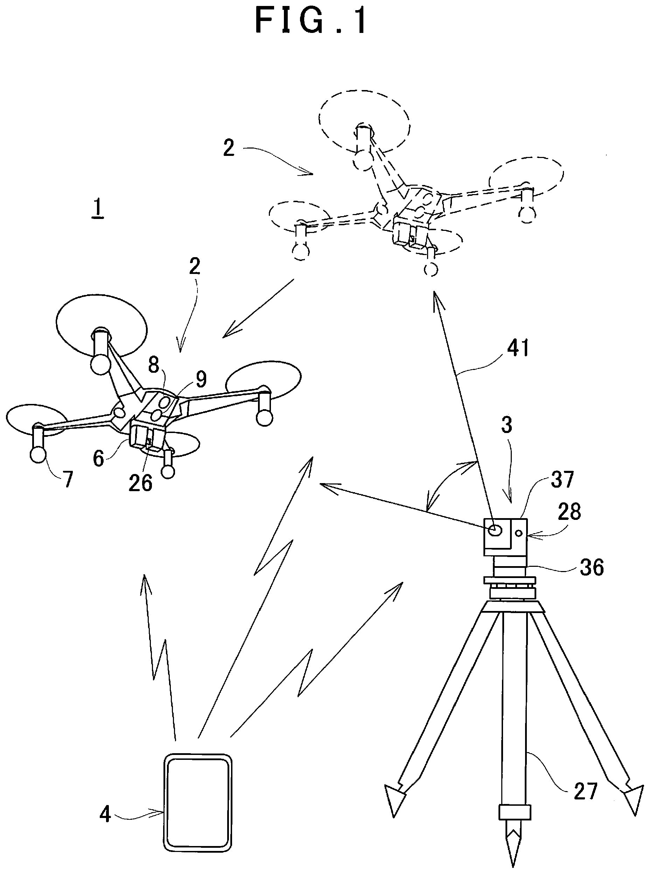

The flying vehicle system 2 mainly includes a flying vehicle 5, a laser scanner 6 as a measuring instrument which is provided on a lower surface of the flying vehicle 5 and rotationally irradiates a distance measuring light, at least three spherical reflectors 7 (in FIG.1, four which are 7a to 7d) provided at predetermined positions on the flying vehicle 5, a plurality of flying vehicle cameras 8 (for instance, four) provided on a peripheral surface of the flying vehicle 5, an infrared camera 9 provided at a predetermined position on the peripheral surface of the flying vehicle 5, and a flying vehicle communication module 11 (to be described later) which communicates with the remote controller 4.

It is to be noted that a reference point and a reference direction are set to the flying vehicle 5. The reference point is, for instance, a machine center of the flying vehicle 5 and placed on a vertical axis of the flying vehicle 5. Further, the reference direction can be set to an arbitrary direction and coincides with, for instance, an image pickup optical axis of the infrared camera 9. The reference point and the reference direction, an optical center of the laser scanner 6 (a projecting position of the distance measuring light) a center of each reflector 7, an optical center of each flying vehicle camera 8, and an optical center of the infrared camera 9 have known positional relationships, respectively.

The laser scanner 6 projects a pulse-emitted laser beam or a burst-emitted laser beam as a distance measuring light, and irradiates the distance measuring light to a predetermined object via a scanning mirror (to be described later). Further, the distance measuring light reflected by the object (a reflected measuring light) is received by the laser scanner 6, and a distance to the object is determined based on a round-trip time and the light velocity. Further, by rotating the scanning mirror, the distance measuring light is one-dimensionally rotationally irradiated within a plane including a vertical axis of the flying vehicle 5.

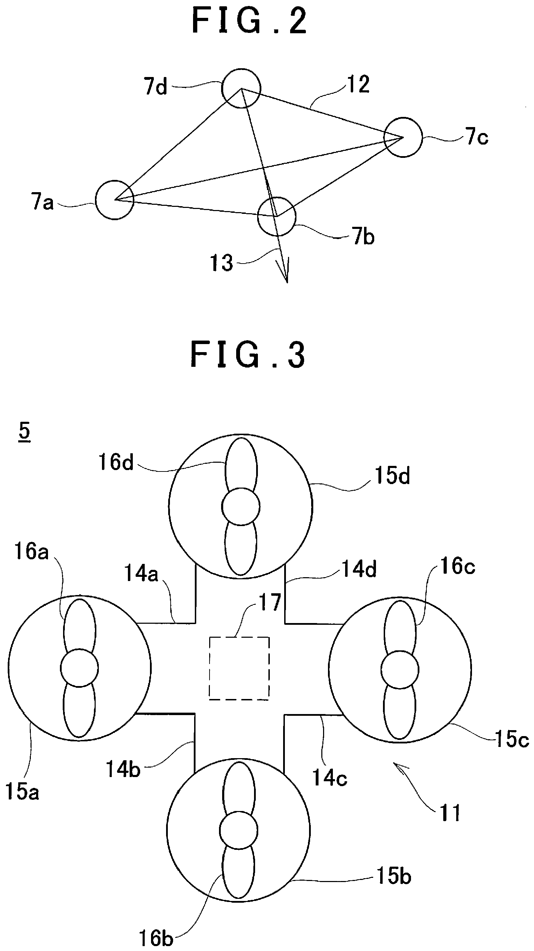

Each reflector 7 is a spherical reflecting member which has a reflective sheet having the retroreflective ability affixed to the entire outer peripheral surface, respectively. Each of the reflectors 7 have a known diameter, and a positional relationship (a distance) between centers of the respective reflectors 7 is known. As shown in FIG.2, a plane 12 formed by connecting the centers of the respective reflectors 7(7a to 7d in the figure) has a known positional relationship with the reference point of the flying vehicle 5, and the respective reflectors 7 are provided in such a manner that a normal line 13 passing through the center of the plane 12 coincides with a vertical axis of the flying vehicle 5. It is to be noted that the respective reflectors 7 may have the same diameter or different diameters.

As regards each flying vehicle camera 8, field angle, the number, the arrangement, and the like of the respective flying vehicle cameras 8 are determined so that images of the neighboring flying vehicle cameras 8 overlap by a predetermined amount. Further, an image pickup optical axes of the respective flying vehicle cameras 8 are set in such a manner that, for instance, the image pickup optical axes are orthogonal to the reference point of the flying vehicle 5 and cross at the reference point. Further, a positional relationship between an image pickup center of each flying vehicle camera 8 and the reference point is known.

The infrared camera 9 is configured to acquire infrared images with a predetermined field angle. Further, an image pickup optical axis of the infrared camera 9 has a known positional relationship with the reference point of the flying vehicle 5 and the image pickup optical axis of each flying vehicle camera 8, and a positional relationship between an image pickup center of the infrared camera 9 and the reference point is known.

The position measuring instrument 3 is installed at a point having known three-dimensional coordinates. The position measuring instrument 3 has a tracking function and tracks the respective reflectors 7 while sequentially measuring the respective reflectors 7. By measuring three-dimensional coordinates of the respective reflectors 7, the position measuring instrument 3 enables calculating the plane 12 obtained by connecting the centers of the respective reflectors 7 and the normal line 13 passing through the center of the plane 12. An attitude of the flying vehicle system 2 can be calculated based on a tilt (a tilt angle, a tilt direction) of the normal line 13. Further, the position measuring instrument 3 can wirelessly communicate with the remote controller 4, and three-dimensional coordinates of the reflectors 7 and the attitude of the flying vehicle system 2 measured by the position measuring instrument 3 are input to the remote controller 4 as the coordinate data and the attitude data.

The remote controller 4 is a mobile terminal such as a smartphone or a tablet, or a device having an input device connected to or integrated with the mobile terminal. The remote controller 4 has an arithmetic device having a calculating function, a storage module for storing the data and programs, and a terminal communication module (to be described later). The remote controller 4 enables the wireless communication with the flying vehicle system 2 via the terminal communication module and the flying vehicle communication module 11, and enables the wireless communication with the position measuring instrument 3 via the terminal communication module and a communication module of the position measuring instrument 3. Further, the remote controller 4 can remotely control the flying of the flying vehicle system 2 and the distance measurement operation of the laser scanner 6, and can also remotely control the measurement performed by the position measuring instrument 3.

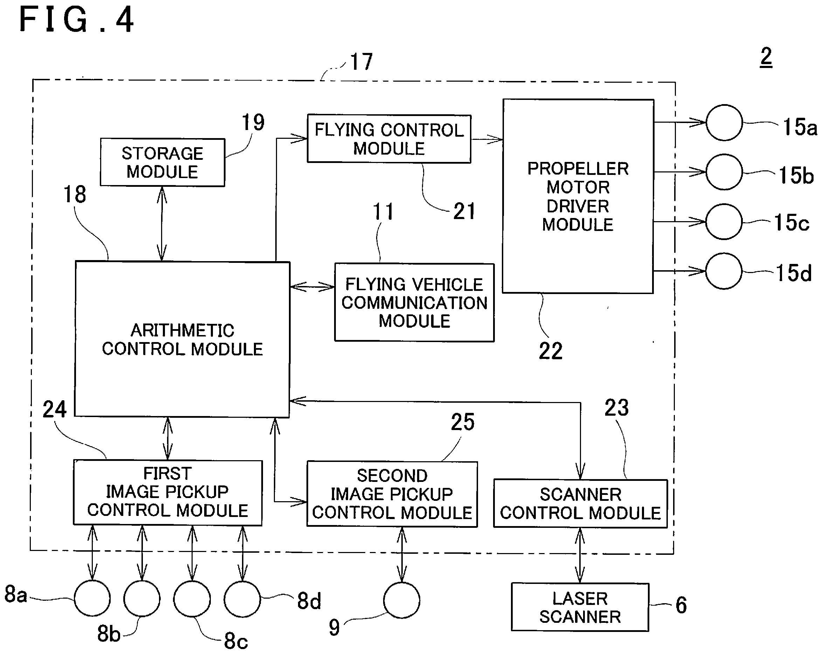

Next, by referring to FIG.3 and FIG.4, a description will be given on the flying vehicle system 2.

The flying vehicle 5 has a plurality of and even-numbered propeller frames 14 (in the drawing, 14a to 14d) extending in a radial direction. The center of the propeller frames 14 is the center of the flying vehicle system 2. A propeller unit is provided at a forward end of each propeller frame 14, respectively. The propeller units are constituted of propeller motors 15 (in the figure, 15a to 15d) mounted on the forward end of the propeller frames 14, propellers 16 (in the figure, 16a to 16d) mounted on an output shafts of the propeller motors 15, and the reflectors 7 provided at predetermined positions of the propeller motors 15, for instance, lower end portions of the propeller motors 15. Further, a flying controller 17 is incorporated in the flying vehicle 15. It is to be noted that the reflectors 7 may be provided at the lower end portions of the propeller motors 15 via shafts having a known length.

The flying controller 17 mainly includes an arithmetic control module 18, a storage module 19, a flying control module 21, a propeller motor driver module 22, a scanner control module 23, a first image pickup control module 24, a second image pickup control module 25, and the flying vehicle communication module 11.

It is to be noted that, in the present embodiment, the scanner control module 23 is included in the flying controller 17, but the scanner control module 23 and the flying controller 17 may be separately configured. For instance, the scanner control module 23 is incorporated in the laser scanner 6, and control signals may be transmitted or received between the flying vehicle 5 and the laser scanner 6 via the flying vehicle communication module 11.

In the storage module 19, a program storage module and a data storage module are formed. In the program storage module, various types of programs are stored. These programs include: a photographing program for controlling the photographing of the flying vehicle cameras 8 (in the figure, the flying vehicle cameras 8a to 8d) and the infrared camera 9, a feature point extraction program for extracting feature points from the image data, a positional deviation calculation program for calculating a positional deviation between the identical feature points in the image data adjacent in terms of time, a flying control program for driving and controlling the propeller motors 15, a distance measurement program for controlling a distance measuring operation performed by the laser scanner 6, a communication program for transmitting the acquired data to the remote controller 4 and receiving a flight instruction or an image pickup instruction from the remote controller 4, and other programs.

In the data storage module, various types of data are stored. These data include: the still image data or the moving image data acquired by the flying vehicle cameras 8, the positional data or the attitude data received via the remote controller 4 and measured by the position measuring instrument 3, a moving distance of the flying vehicle system 2 calculated based on a positional deviation between feature points, and the moving direction data, and times at which the still image data and the moving image data were acquired, the positional data, and other data.

The flying control module 21 drives and controls the propeller motors 15 to a necessary state via the propeller motor driver module 22 based on control signals regarding the flying.

The scanner control module 23 controls the driving of the laser scanner 6. That is, the scanner control module 23 controls a light emission interval of the distance measuring light, a rotation speed of a scanning mirror 26 (see FIG.1), and the like, and makes rotationally irradiate the distance measuring light via the scanning mirror 26. Further, the scanner control module 23 controls a point cloud interval or the point cloud density of the distance measuring light irradiated from the laser scanner 6. Further, reflected distance measuring light is associated with a rotation angle of the scanning mirror 26 and input to the arithmetic control module 18, and the distance measurement is performed.

The first image pickup control module 24 controls the photographing of the flying vehicle cameras 8 based on a control signal emitted from the arithmetic control module 18. As the flying vehicle cameras 8, for instance, digital cameras are used, still images can be taken, and frame images constituting moving images or continuous images can be acquired. Further, as an image pickup element, a CCD or CMOS sensor or the like which is an aggregation of pixels is provided, and a position of each pixel in the image pickup element can be identified. For instance, a position of each pixel is identified by Cartesian coordinates having a point which optical axes of the flying vehicle cameras 8 pass through as an origin. Each pixel outputs pixel coordinates together with a light reception signal to the first image pickup control module 24.

The second image pickup control module 25 controls the photographing of the infrared camera 9 based on a control signal emitted from the arithmetic control module 18. The infrared camera 9 has an image pickup element, and a position of each pixel can be identified by Cartesian coordinates having a point which an optical axis of the infrared camera 9 passes through as an origin. Each pixel outputs pixel coordinates together with a light reception signal to the second image pickup control module 25.

The arithmetic control module 18 develops and executes various types of programs stored in the storage module 19, and performs various types of control for scanning (measuring) an object with the distance measuring light. Further, the arithmetic control module 18 calculates a control signal regarding the flying based on the steering signal or a positional deviation of a feature point between the image data adjacent in terms of time, and outputs the control signal to the flying control module 21.

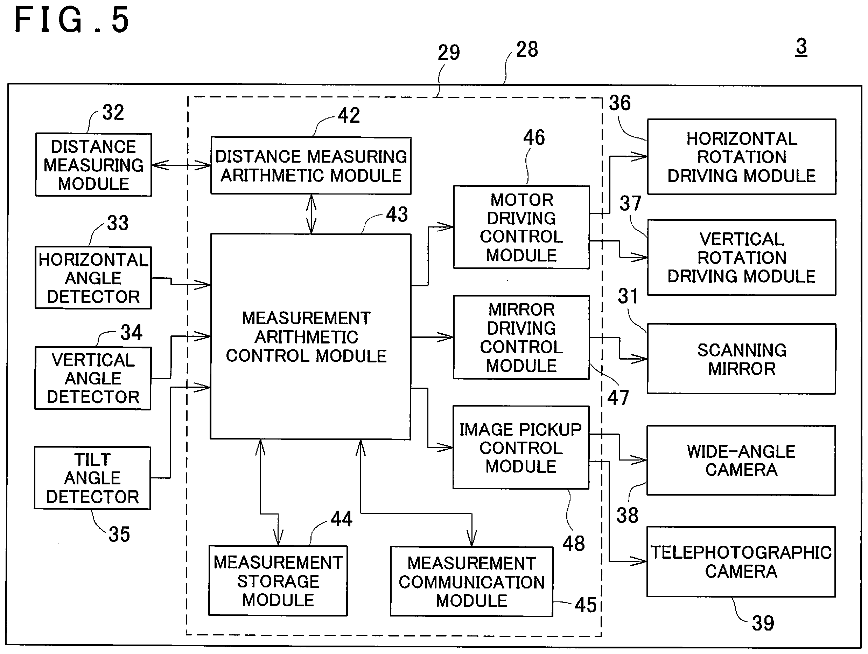

Next, a description will be given on the position measuring instrument 3 by referring to FIG.5.

The position measuring instrument 3 has a measuring instrument main body 28 mounted on a tripod 27 (see FIG.1). The measuring instrument main body 28 mainly includes a measurement controller 29 as an arithmetic control module, a scanning mirror 31 as a distance measuring light deflector, a distance measuring module 32, a horizontal angle detector 33, a vertical angle detector 34, a tilt angle detector 35, a horizontal rotation driving module 36, a vertical rotation driving module 37, a wide-angle camera 38, a telephotographic camera 39, and the like.

The measuring instrument main body 28 can rotate in the horizontal direction by the horizontal rotation driving module 36 and can rotate in the vertical direction by the vertical rotation driving module 37.

The scanning mirror 31 is a MEMS mirror which can freely tilt in, for instance, two axial (an "X" axis and a "Y" axis) directions orthogonal to each other. The MEMS mirror is a mirror which is driven by the Lorentz force when a current is flowed through a coil, and the MEMS mirror can tilt back and forth two-dimensionally in a desired direction at a desired angle based on the positive/negative and magnitude of a driving current. It is to be noted that a range in which the scanning mirror 31 can be tilted is, for instance, ±30° in the two axial directions.

The distance measuring module 32 projects a distance measuring light 41 (see FIG.1) via the scanning mirror 31 and an optical system of the telephotographic camera 39, receives a reflected distance measuring light reflected by the object via the scanning mirror 31 and the optical system of the telephotographic camera 39, and performs the distance measurement. That is, the distance measuring module 32 functions as an electronic distance meter. The distance measuring light 41 is a pulsed light or a pulsed like light, and the distance measurement is performed for each pulsed light. Further, the scanning mirror 31 deflects an optical axis of the distance measuring light 41 in the range of, for instance, ±30°, a local scan with the distance measuring light 41 is enabled with the high responsiveness. It is to be noted that, as the distance measuring light 41, a light having a wavelength different from that of the distance measuring light used in the laser scanner 6 is used.

The horizontal angle detector 33 detects a horizontal angle in a sighting direction of the wide-angle camera 38 or the telephotographic camera 39. It is to be noted that the horizontal angle to be detected is a horizontal angle with respect to an arbitrary reference direction set in advance. Further, the vertical angle detector 34 detects a vertical angle in the sighting direction of the wide-angle camera 38 or the telephotographic camera 39. Further, the tilt angle detector 35 detects respective tilt angles and a composite tilt angle of two axes of the scanning mirror 31. Detection results of the horizontal angle detector 33, the vertical angle detector 34 and the tilt angle detector 35 are input to the measurement controller 29.

The wide-angle camera 38 and the telephotographic camera 39 are incorporated in the position measuring instrument 3. The wide-angle camera 38 has a wide field angle of, for instance, 30°, and the telephotographic camera 39 has a field angle narrower than that of the wide-angle camera 38, which is, for instance, 5°. It is to be noted that an optical axis of the wide-angle camera 38 and an optical axis of the telephotographic camera 39 are parallel, respectively, and a distance between the respective optical axes is known. Therefore, an image acquired by the wide-angle camera 38 can be associated with an image acquired by the telephotographic camera 39. Each reflector 7 can be captured in a field angle of the wide-angle camera 38 or the telephotographic camera 39. It is to be noted that a position of the scanning mirror 31 when an optical axis of the distance measuring light 41 is parallel to or coincides with an optical axis of the wide-angle camera 38 or an optical axis of the telephotographic camera 39 is determined as a reference position of the scanning mirror 31.

The measurement controller 29 mainly has a distance measuring arithmetic module 42, a measurement arithmetic control module 43, a measurement storage module 44, a measurement communication module 45, a motor driving control module 46, a mirror driving control module 47, an image pickup control module 48 and the like.

The distance measuring arithmetic module 42 controls the distance measuring operation with respect to each reflector 7 by the distance measuring module 32 based on a control signal transmitted from the measurement arithmetic control module 43. That is, based on a round-trip time of a pulsed light, for instance, a time lag between the light emission timing of the distance measuring light 41 projected from the distance measuring module 32 and the light reception timing of a reflected distance measuring light received by the distance measuring module 32, and the light velocity, the distance measuring arithmetic module 42 performs the distance measurement for each pulse of the distance measuring light 41 (Time Of Flight). Further, as a distance measuring method, an FMCW (Frequency Modulated Continuous Wave) by which a frequency of a laser beam is chirped and a distance is measured based on a frequency difference of a returned light is also applicable.

Further, in the measurement storage module 44, various types of programs are stored. These programs include: an image processing program for extracting the reflectors 7 from images of the wide-angle camera 38 or the telephotographic camera 39 and detecting positions of the reflectors 7, a measurement program for sequentially performing a local scan with respect to each reflector 7, performing the measurement (the distance measurement and the angle measurement) of each reflector 7, and calculating respective three-dimensional coordinates of the reflectors 7 in real time, an attitude calculation program for calculating the normal line 13 of the plane 12 based on a measurement result of each reflector 7 and calculating an attitude of the flying vehicle 5, an azimuth calculation program for calculating an azimuth of the flying vehicle 5, a prediction program for acquiring measurement results of the respective reflectors 7 in time series and predicting a position of the next reflector 7, a tracking program for performing the tracking of each reflector 7, an image pickup program for performing the image pickup of the wide-angle camera 38 and the telephotographic camera 39, a communication program for performing the communication with the flying vehicle system 2 and the remote controller 4 and other programs. Further, in the measurement storage module 44, measurement results (a distance measurement result, an angle measurement result) of the respective reflectors 7 are stored in association with measurement times in time series.

The measurement communication module 45 transmits the measurement result of the reflectors 7 (a slope distance, a horizontal angle, and a vertical angle of the reflectors 7) to the remote controller 4 in real time.

To sight the reflectors 7 or to track the reflectors 7, the motor driving control module 46 controls the horizontal rotation driving module 36 and the vertical rotation driving module 37, and rotates the measuring instrument main body 28 in the horizontal direction or the vertical direction. It is to be noted that the horizontal rotation driving module 36 and the vertical rotation driving module 37 are a main body driving module configured to rotate the measuring instrument main body 28 in the horizontal direction and the vertical direction.

The mirror driving control unit 47 tilts the scanning mirror 31 back and forth in a predetermined direction within a predetermined angle range and makes the distance measuring light 41 perform a two-dimensionally area-scan (a raster scan) a predetermined range from a predetermined scan center. Further, in case of partially performing a scan (a local scan) at a plurality of positions in the entire scan range, the mirror driving control module 47 performs a local scan while sequentially changing the scan center. By sequentially performing the local scan, this scan enables obtaining the same effect as that of simultaneously performing a local scan at a plurality of positions. Further, the image pickup control module 48 is configured to control the image pickup of the wide-angle camera 38 and the telephotographic camera 39.

The position measuring instrument 3 performs the distance measurement while sequentially tracking the respective reflectors 7, and measures three-dimensional coordinates of the respective reflectors 7 in real time based on a distance measurement result and detection results of the horizontal angle detector 33, the vertical angle detector 34, and the tilt angle detector 35. Further, the measurement arithmetic control module 43 calculates the plane 12 based on measurement results of the respective reflectors 7, calculates the normal line 13 of the plane 12, and calculates an attitude of the flying vehicle system 2 (the flying vehicle 5) based on the normal line 13 in real time. Further, sequentially measuring the respective reflectors 7 are sequentially measured, and the planes 12 are sequentially calculated as well. Therefore, by sequentially calculating rotational displacements between the planes 12 adjacent in terms of time, the measurement arithmetic control module 43 can calculate a relative rotational angle of the plane 12 with respect to an initial position, that is, a relative azimuth angle of the flying vehicle system 2 with respect to the reference direction.

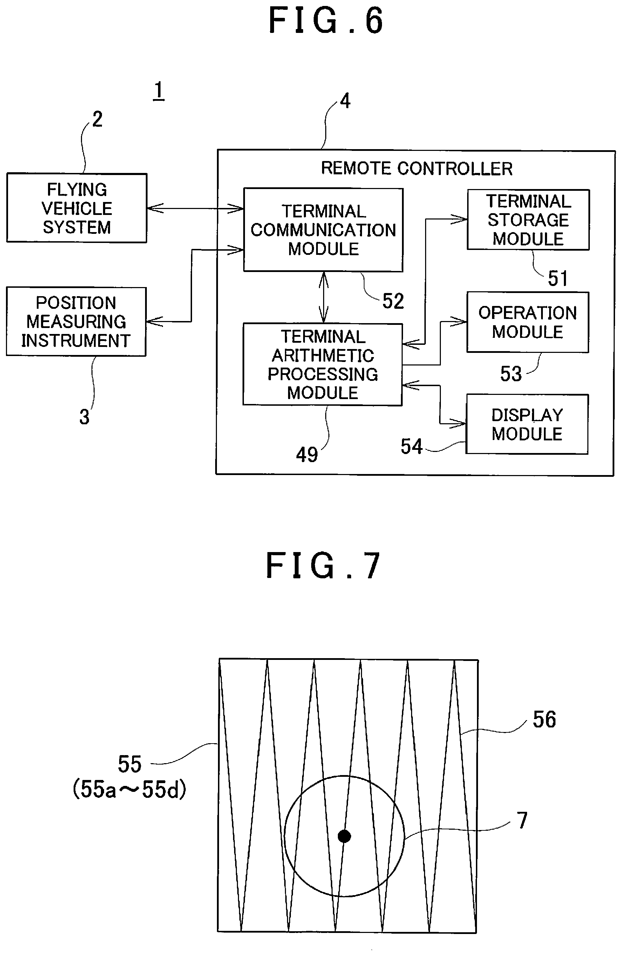

FIG.6 is a diagram to show an outline configuration of the remote controller 4 and a relationship between the flying vehicle system 2, the position measuring instrument 3, and the remote controller 4.

The remote controller 4 include a terminal arithmetic processing module 49 having an arithmetic function, a terminal storage module 51, a terminal communication module 52, an operation module 53, and a display module 54.

The terminal arithmetic processing module 49 has a clock signal generator, and associates the image data, the measurement data, and the like received from the flying vehicle system 2 or the image data, the measurement data, and the like received from the position measuring instrument 3 with clock signals. Further, the terminal arithmetic processing module 49 processes various types of received data as the time-series data based on the clock signals, and stores the various types of received data in the terminal storage module 51.

In the terminal storage module 51, various types of programs are stored. These programs include: a communication program for communicating with the flying vehicle system 2 or the position measuring instrument 3, a program for calculating three-dimensional coordinates of the respective reflectors 7 based on three-dimensional coordinates of an installing position of the position measuring instrument 3, a program for converting three-dimensional coordinates measured by the laser scanner 6 into three-dimensional coordinates with reference to the installing position of the position measuring instrument 3 based on measurement results of the respective reflectors 7, a tilt of the plane 12, and a distance to a reference point of the flying vehicle 5, a display program for displaying scan screens, measurement results, images acquired by the respective cameras, and the like in the display module 54, an operation program for inputting instructions via a touch panel or the like, and other programs. Further, in the terminal storage module 51, the data of absence of the irregularities, the peeling, the dropping, and the like on a later-described inspection surface, for instance, the design data is stored in the advance.

The terminal communication module 52 performs the communication with flying vehicle system 2 and with the position measuring instrument 3. Further, the operation module 53 inputs various types of instructions via buttons or the like of a controller integrally provided with the display module 54, and operates the flying vehicle 5.

The display module 54 displays camera images and infrared images acquired by the flying vehicle camera 8 and the infrared camera 9, wide-angle images acquired by the wide-angle camera 38, telephotographic images acquired by the telephotographic camera 39, measurement result screens to show measurement results acquired by the position measuring instrument 3 or the laser scanner 6, and the like.

It is to be noted that the entire display module 54 may be configured as a touch panel. In a case where the entire display module 54 is a touch panel, the operation module 53 may be omitted. In this case, an operation panel for operating the flying vehicle 5 is provided on the display module 54.

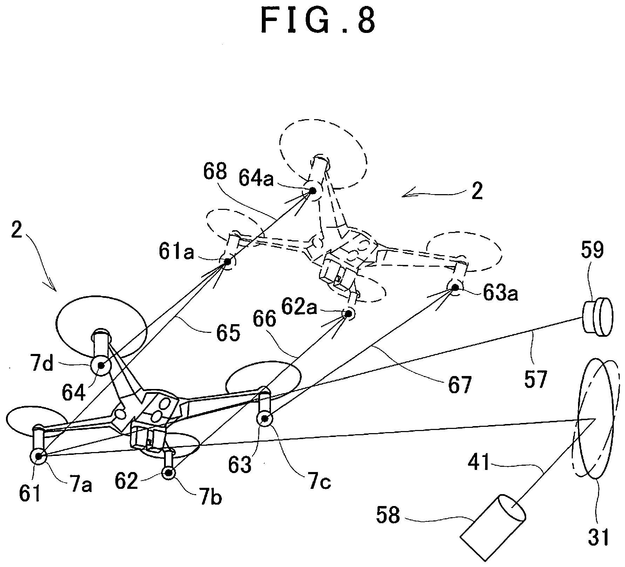

Next, by referring to FIG.7 and FIG.8, a description will be given on the tracking of the flying vehicle system 2. It is to be noted that, in the following description, the reflectors 7 are provided at four positions.

First, in a state where the flying vehicle system 2 is stayed at a predetermined standby position, the position measuring instrument 3 performs the measurement of the four reflectors 7 sequentially. The orientation of the position measuring instrument 3 is adjusted in such a manner that all the reflectors 7 are included in a wide-angle image or a telephotographic image, and the measurement arithmetic control module 43 extracts the respective reflectors 7 from the wide-angle image or the telephotographic image. Further, based on positions of the respective reflectors 7 in the wide-angle image or the telephotographic image, a scan direction and a scan range (a measuring area 55) are set. It is to be noted that the scan direction and the scan range may be manually set via the operation module 53, or the measurement arithmetic control module 43 may automatically perform the setting of the scan direction and the scan range. Further, at the standby position, an azimuth angle of a reference direction of the flying vehicle system 2 is known by an azimuth meter or the like.

The position measuring instrument 3 locally scans the measuring area 55 of a predetermined range in a raster scan manner based on the cooperation of the projection of the distance measuring light 41 by the distance measuring module 32 and the tilting of the scanning mirror 31 in the two axial directions. It is to be noted that a scan density in the measuring area 55 is appropriately set in correspondence with a situation. Further, a size of the measuring area 55 is set to a size which includes at least any one of the reflectors 7.

The position measuring instrument 3 performs a scan in the measuring area 55 at a predetermined scan density and acquires the point cloud data along a locus 56 of the distance measuring light 41. In the present embodiment, each of the reflectors 7 as an object is a sphere which a reflective sheet having the retroreflective ability affixed on its entire surface.

Therefore, in a case where the center of the reflector 7 is not present on the optical axis of the distance measuring light 41, since the reflected distance measuring light 57 is not reflected toward the distance measuring module 32, the measurement result of the reflectors 7 cannot be calculated. That is, only in a case where the center of the reflector 7 is present on the optical axis of the distance measuring light 41, a measurement result can be calculated.

Therefore, when a local scan has been performed in the measuring area 55, a measurement result of a point where the measurement result has been calculated is determined as a measurement result of the reflector 7. It is to be noted that the measurement result of the reflector 7 is three-dimensional coordinates of the surface of the reflector 7, and the three-dimensional coordinates of the center of the reflector 7 can be calculated based on a measurement result of the reflector 7 and a known diameter of the reflector 7.

At the time of tracking the flying vehicle system 2, the horizontal rotation driving module 36 and the vertical rotation driving module 37 are driven with respect to the flying vehicle system 2 installed at an initial position (a standby position) in a stationary state and in an arbitrary attitude, each reflector 7 is extracted from the wide-angle image or the telephotographic image, and a direction (a direction angle) to the reflector 7 is obtained from the image.

First, the measuring area 55 (a first measuring area 55a) centered on the predetermined reflector 7 (a reflector 7a) is set, the measuring area 55 (a second measuring area 55b) centered on the reflector 7 (a reflector 7b) adjacent to the reflector 7a is set, a measuring area 55 (a third measuring area 55c) centered on the reflector 7 (a reflector 7c) adjacent to the reflector 7b is set, and a measuring area 55 (a fourth measuring area 55d) centered on the reflector 7 (a reflector 7d) adjacent to the reflector 7c is set.

When the respective measuring areas 55a to 55d are set, the measurement arithmetic control module 43 performs a local scan in the first measuring area 55a using the distance measuring light 41 with the center of the reflector 7a extracted from an image as a scan center by the cooperation of the distance measuring module 32 (in FIG.8, a light emitter 58 and a photodetector 59) and the scanning mirror 31, and measures the reflector 7a.

Likewise, the measurement arithmetic control module 43 performs a local scan in the second measuring area 55b using the distance measuring light 41 with the center of the reflector 7b extracted from an image as a scan center so that the reflector 7b is measured, performs a local scan in the third measuring area 55c using the distance measuring light 41 with the center of the reflector 7c extracted from an image as a scan center so that the reflector 7c is measured, and performs a local scan in the fourth measuring area 55d using the distance measuring light 41 with the center of the 7d extracted from an image as a scan center so that the reflector 7d is measured.

Here, three-dimensional coordinates of the reflector 7a as measured are set as a first initial position 61 of the reflector 7a, three-dimensional coordinates of the reflector 7b as measured are set as a second initial position 62 of the reflector 7b, three-dimensional coordinates of the reflector 7c as measured are set as a third initial position 63 of the reflector 7c, and three-dimensional coordinates of the reflector 7d as measured are set as a fourth initial position 64 of the reflector 7d. The respective set initial positions 61 to 64 are stored in the measurement storage module 44.

After setting the respective initial positions 61 to 64, the tracking by the position measuring instrument 3 is started, and the flying vehicle system 2 is flown. During the tracking, the measurement arithmetic control module 43 sequentially repeatedly performs a local scan (a first local scan) centered on the first initial position 61, a local scan (a second local scan) centered on the second initial position 62, a local scan (a third local scan) centered on the third initial position 63, and a local scan (a fourth local scan) centered on the fourth initial position 64, and measures the reflectors 7a to 7d at substantially the same time and substantially in real time. As the flying vehicle system 2 moves, measured values of the reflectors 7a to 7d also change. Therefore, a sighting direction of the measuring instrument main body 28 follows changes in the measured values of the reflectors 7a to 7d.

It is to be noted that the scanning mirror 31 can tilt back and forth at the high speed, and the scanning speed is sufficiently faster than the moving speed of the flying vehicle system 2. Therefore, even after sequentially moving the scan center from the reflector 7a to the reflector 7d and sequentially performing the first local scan to the fourth local scan, the reflector 7a can be again captured in the first measuring area 55a centered on the first initial position 61.

By performing the first local scan, the three-dimensional coordinates of the first position 61a of the reflector 7a, which has moved a predetermined distance in a predetermined direction from the first initial position 61, are measured, and a measurement result of the first position 61a is stored in the measurement storage module 44. Further, the measurement arithmetic control module 43 calculates a straight line which connects the first position 61a with the first initial position 61 which is a previously measuring position of the reflector 7a, and the straight line is stored in the measurement storage module 44 as a locus 65 of the reflector 7a. Further, based on the locus 65, a moving direction and the moving speed of the reflector 7a are calculated, and a calculation result is stored in the measurement storage module 44.

After measuring the first position 61a, the measurement arithmetic control module 43 changes the scan center of the local scan to the second initial position 62 based on a positional relationship between the reflector 7a and the reflector 7b. At this time, a position of the reflector 7b is predicted based on the measuring position, the moving direction, and the moving speed of the reflector 7a, and a prediction result is also reflected in the change of the scan center.

Likewise, by performing the second local scan, the measurement arithmetic control module 43 calculates the three-dimensional coordinates of a second position 62a of the reflector 7b, which has moved a predetermined distance in a predetermined direction from the second initial position 62, by performing the third local scan, the measurement arithmetic control module 43 calculates three-dimensional coordinates of a third position 63a of the reflector 7c, which has moved a predetermined distance in a predetermined direction from the third initial position 63, and by performing the fourth local scan, the measurement arithmetic control module 43 calculates three-dimensional coordinates of a fourth position 64a of the reflector 7d, which has moved a predetermined distance in a predetermined direction from the fourth initial position 64. The three-dimensional coordinates of the first position 61a to the fourth position 64a are stored in the measurement storage module 44, respectively.

Further, the measurement arithmetic control module 43 calculates a straight line connecting the second position 62a with the second initial position 62 as a locus 66 of the reflector 7b, calculates a straight line connecting the third position 63a with the third initial position 63 as a locus 67 of the reflector 7c, and calculates a straight line connecting the fourth position 64a with the fourth initial position 64 as a locus 68 of the reflector 7d, and respective calculation results are stored in the measurement storage module 44. Further, the measurement arithmetic control module 43 calculates the moving speed and a moving direction of the reflector 7b based on the locus 66, calculates the moving speed and a moving direction of the reflector 7c based on the locus 67, and calculates the moving speed and a moving direction of the reflector 7d based on the locus 68, and respective calculation results are stored in the measurement storage module 44.

In case of changing a position of the scan center of the local scan to the second initial position 62 to the fourth initial position 64, likewise, a subsequent measuring position is predicted based on the measurement results, moving directions, and the moving speeds of the reflector 7b to the reflector 7d, and a prediction result is reflected in the change of the scan center.

The measurement arithmetic control module 43 calculates the normal line 13 of the plane 12 based on measurement results of the first position 61a, the second position 62a, the third position 63a and the fourth position 64a. That is, the measurement arithmetic control module 43 calculates an attitude of the flying vehicle system 2. Further, the measurement arithmetic control module 43 calculates a relative rotation angle of the plane 12 formed by the respective positions 61a to 64a with respect to the plane 12 formed by the respective initial positions 61 to 64, and calculates an azimuth angle of the reference direction of the flying vehicle system 2 based on the relative rotation angle.

After measuring the fourth position 64a, the measurement of the reflectors 7a to 7d is repeated sequentially, three-dimensional coordinates of first positions 61b, ..., 61n (not shown), second positions 62b, ..., 62n (not shown), third positions 63b, ..., 63n (not shown), and fourth positions 64b, ..., 64n (not shown) are calculated sequentially, and respective calculation results are stored in the measurement storage module 44. Further, a straight line connecting each measuring position with a previously measuring position is stored in the measurement storage module 44 as each of loci 65 to 68 of the reflectors 7a to 7d.

By repeating the measurement of the reflectors 7a to 7d sequentially, positions of the reflectors 7a to 7d are measured in real time, and the tracking of the flying vehicle system 2 by the position measuring instrument 3 is performed based on measurement results of the reflectors 7a to 7d. Further, in parallel with the tracking of the flying vehicle system 2, an attitude of the flying vehicle system 2 is calculated in real time. Further, assuming that the measurement of the reflector 7a to the reflector 7d is one cycle, a relative rotation angle of the plane 12 with respect to the plane 12 in a previous cycle is calculated sequentially based on measurement results of the respective reflectors 7a to 7d, and hence an azimuth angle of the reference direction of the flying vehicle system 2 can be calculated based on each relative rotation angle.

It is to be noted that, since a change in the scan center of the local scan is performed by a MEMS mirror at the high speed, the measurement of the reflectors 7a to 7d can be carried out at substantially the same time and substantially in real time. Therefore, since the reflectors 7a to 7d are always measured in the same order, a rotational displacement between the planes 12 can be regarded as a relative rotational angle, and there is no need to distinguish the respective reflectors 7a to 7d. Further, since the moving speed of the flying vehicle system 2 is not the high speed, the flying vehicle system 2 can be sufficiently tracked by the rotation of the measuring instrument main body 28 by the horizontal rotation driving module 36 and the vertical rotation driving module 37.

During the tracking of the flying vehicle system 2, the distance measuring light 41 may be blocked by the flying vehicle 5 and measurement results of the reflectors 7a to 7d may not be obtained even if a local scan is performed. In this case, the center of the local scan is moved to a next measuring position as unmeasurable. A change in the scan center of the local scan reflects prediction results based on the measurement results of the other reflectors 7 and the change speed is high speed. Therefore, the tracking can continue even in a case where there are the reflectors 7 which cannot be measured. Further, since if three of the reflectors 7a to 7d can be measured, the plane 12 can be calculated, the attitude detection and the azimuth angle detection in real time are possible even in a case where one of the reflectors 7a to 7d cannot be measured.

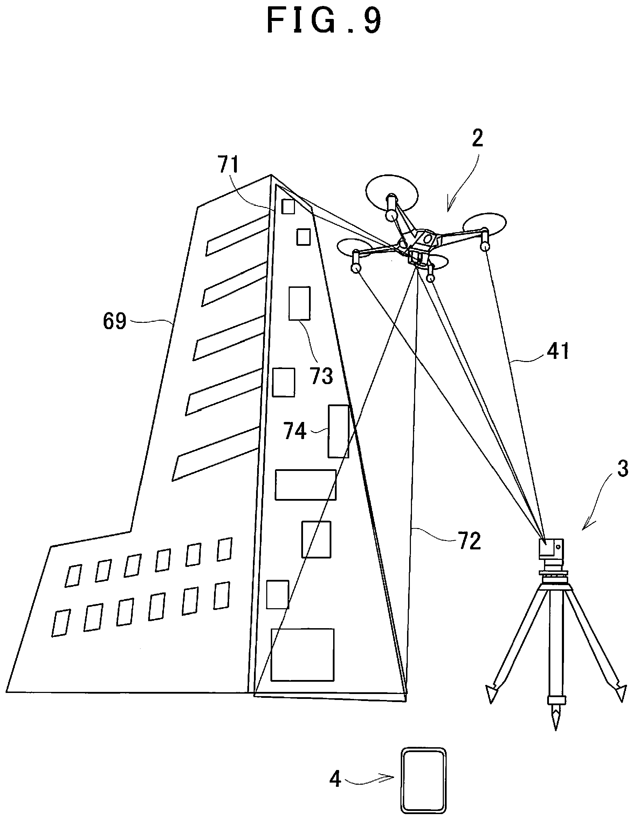

Next, by referring to reference to FIG.9, a description will be given on the measurement using the surveying system 1.

In case of starting the measurement, the flying vehicle 5 is flown from a standby position via the remote controller 4. At this time, the flying vehicle 5 may be manually operated via the operation panel of the remote operator 4, or the flying vehicle 5 may be automatically flown based on a flying program set in advance. Further, in case of manually operating the flying vehicle 5, the flying may be visually operated, or the flying may be operated based on images acquired by the flying vehicle camera 8.

It is to be noted that, since the flying vehicle 5 does not have an azimuth meter, an azimuth of the flying vehicle 5 during the flying cannot be directly detected. In the present embodiment, the measurement arithmetic control module 43 or the terminal arithmetic processing module 49 calculates a relative rotation angle of the flying vehicle 5 based on a rotational displacement between the planes 12 adjacent in terms of time, and calculates an azimuth angle of the flying vehicle 5 based on each relative rotation angle and the azimuth angle of the reference direction set at the standby position.

Alternatively, from a time point at which the flying of the flying vehicle 5 has started, the first image pickup control module 24 continuously acquires a flying vehicle camera image in accordance with each of the flying vehicle cameras 8a to 8d. Since the flying vehicle cameras 8a to 8d are arranged in such a manner that flying vehicle camera images acquired by the adjacent flying vehicle cameras overlap by a predetermined amount, a flying vehicle camera image of the 360°whole circumference can be acquired.

The arithmetic control module 18 extracts feature points from corners of a building or steel frame, a characteristic luminance, or the like in accordance with each of the flying vehicle camera images. Further, the arithmetic control module 18 compares the flying vehicle camera images which have been acquired by the same flying vehicle camera 8 and are adjacent in terms of time.

Based on the two flying vehicle camera images which are adjacent in terms of time, the arithmetic control module 18 calculates a positional deviation of the same feature points in the flying vehicle camera images. Further, regarding the flying vehicle camera images acquired similarly by the other flying vehicle cameras 8, the arithmetic control module 18 calculates a positional deviation of feature points in the flying vehicle camera images.

A position of each pixel in an image pickup element can be identified. Therefore, regarding each flying vehicle camera 8, by comparing positions of feature points in the flying vehicle camera images adjacent in terms of time, the arithmetic control module 18 enables calculating a tilt angle, an azimuth angle, and a moving amount of the flying vehicle 5 at a time point where the subsequent flying vehicle camera image is acquired with respect to a time point where the preceding flying vehicle camera image was acquired.

The arithmetic control module 18 controls an attitude or a flying condition of the flying vehicle 5 based on the sequentially calculated tilt angle, azimuth angle, and moving amount of the flying vehicle 5 (an optical flow). It is to be noted that, for controlling the flying condition, an attitude, an azimuth angle, or a moving amount calculated by the position measuring instrument 3 may be used.

It is to be noted that, in the present embodiment, both the flying vehicle system 2 and the position measuring instrument 3 can calculate a tilt angle, an azimuth angle, and a moving amount of the flying vehicle 5. On the other hand, since the position measuring instrument 3 can perform a calculation with a higher accuracy than that of the flying vehicle system 2. Therefore, the calculation by the position measuring instrument 3 is used in a case where a tilt angle, an azimuth angle, and a moving amount can be all calculated. Further, in a case where only the calculation using the flying vehicle system 2 was possible, a tilt angle, an azimuth angle and a moving amount calculated by the flying vehicle system 2 are used.

When the flying vehicle system 2 is moved to the vicinity of a structure 69 which is an object, the measurement and the inspection of the structure 69 are started by the flying vehicle system 2. It is to be noted, in FIG.9, the structure 69 is, for instance, a building, and an inspection surface 71 which is an object surface to be measured is one surface of the building.

In a state where the tracking of the flying vehicle system 2 continued, the scanner control module 23 rotates the scanning mirror 26 while projecting a distance measuring light 72 at a wavelength different from a wavelength of the distance measuring light 41, and rotationally irradiates the distance measuring light 72 in a one-dimensional manner within a plane including a vertical axis of the flying vehicle 5. Further, the flying control module 21 flies or rotates the flying vehicle 5 in a direction orthogonal to an irradiating direction of the distance measuring light 72. The scanner control module 23 performs a two-dimensional scan with the distance measuring light 72 by the cooperation of the rotation of the scanning mirror 26 and the flying or the rotation of the flying vehicle 5, and can be acquired the three-dimensional point cloud data of the entire inspection surface 71.

The three-dimensional coordinates for each point of the three-dimensional point cloud data with reference to a reference point of the flying vehicle 5 are associated with the plane 12 or the azimuth angle of the flying vehicle 5 obtained based on the flying vehicle camera image 73 and a position (a position of the reference point) and an attitude of the flying vehicle 5, and stored in the storage module 19. Alternatively, the remote controller 4 associates the three-dimensional point cloud data received from the flying vehicle system 2 with the position, the attitude, and the azimuth of the flying vehicle 5 received from the position measuring instrument 3, and stores them in the terminal storage module 51. The terminal arithmetic processing module 49 calculates a position of the reference point of the flying vehicle 5 (three-dimensional coordinates) and an attitude and an azimuth of the flying vehicle 5 based on measurement results of the reflectors 7a to 7d. Further, the terminal arithmetic processing module 49 converts the three-dimensional point cloud data acquired by the laser scanner 6 into the three-dimensional point cloud data with reference to an installing position of the position measuring instrument 3 based on arithmetic results.

The terminal arithmetic processing module 49 compares the three-dimensional point cloud data acquired by the flying vehicle system 2, that is, a surface shape of the inspection surface 71 with the design data stored in the terminal storage module 51. Further, the terminal arithmetic processing module 49 can detect defects, for instance, the unevenness (irregularities), the peeling or the falling tiles or the like of the inspection surface 71 based on comparison results.

Further, the terminal arithmetic processing module 49 transmits to the flying vehicle system 2 a position on the inspection surface 71 from which a defect has been detected and an instruction to photograph the position on the inspection surface 71.

The arithmetic control module 18 flies the flying vehicle system 2 to the defect position based on the position of the defect received from the remote controller 4. Further, the arithmetic control module 18 rotates the flying vehicle 5 in such a manner that any one of the flying vehicle cameras 8 and the infrared camera 9 face the defect position, and acquires a flying vehicle camera image 73 of the defect position by the flying vehicle camera 8 and an infrared image 74 of the defect position by the infrared camera 9. The acquired flying vehicle camera image 73 and infrared image 74 are associated with the defect position and the azimuth angle, and stored in the storage module 19. Alternatively, the flying vehicle camera image 73 and the infrared image 74 are transmitted together with the azimuth angle to the remote controller 4, are associated with the position and the attitude of the flying vehicle 5 received from the position measuring instrument 3, and are stored in the terminal storage module 51.

Based on the acquired flying vehicle camera image 73, details of the defects, for instance, the unevenness, the peeling, and the falling of the inspection surface 71 can be determined with the same accuracy as an accuracy of the visual inspection from a close distance. Further, based on the infrared image 74, a temperature distribution of the inspection surface 71 is obtained, and a condition of the inspection surface can be determined based on the temperature distribution. It is to be noted that the determination of the details of the defects based on the flying vehicle camera image 73 and the infrared image 74 may be visually performed by a worker, or may be automatically performed by the image processing or the like by the terminal arithmetic processing module 49.

After completing the acquisition of the point cloud data of the entire inspection surface 71, the acquisition of the flying vehicle camera image 73, and the acquisition of the infrared image 74, the flying vehicle system 2 is moved to the next inspection surface 71 or the vicinity of the next structure 69 via the remote controller 4, and the acquisition of the point cloud data, the acquisition of the flying vehicle camera image 73, and the acquisition of the infrared image 74 are performed. It is to be noted that the arithmetic control module 18 may control the flying vehicle system 2 so that the flying vehicle system 2 can automatically move to the next inspection surface 71 or the next structure 69.

After the measurement and the image acquisition of all of the inspection surfaces 71 and all of the structures 69 are completed, the flying vehicle system 2 is landed on a predetermined standby position, and the measurement of the inspection surfaces 71 is finished.

As described above, in the present embodiment, the flying vehicle system 2 can be remotely controlled, and the three-dimensional point cloud data or images can be acquired from the vicinity of the desired inspection surface 71 by the laser scanner 6, the flying vehicle cameras 8, and the infrared camera 9 provided on the flying vehicle system 2.

Therefore, since there is no need for a scaffold for working by a worker or for setting up a tripod mounted a three-dimensional laser scanner, a time and space for creating the scaffold are no longer necessary, a work time can greatly reduce.

Further, since there is no need for the worker for working in the vicinity of a wall and directly inspect the inspection surface 71, the worker does not have to perform the inspection work at a height, the safety is improved.

Further, since the surveying system 1 of the present embodiment is configured to acquire the three-dimensional point cloud data, the flying vehicle camera image 73, and the infrared image 74 with respect to the inspection surface 71 respectively, defect positions can be inspected by the plurality of means, and the inspection surface 71 can be highly accurately inspected.

Further, in the present embodiment, the reflectors 7a to 7d are spheres, and by locally scanning the measuring area 55 which includes any one of the reflectors 7a to 7d, the reflectors 7a to 7d are measured. Therefore, irrespective of orientations of the reflectors 7a to 7d, three-dimensional coordinates of the centers of the reflectors 7a to 7d can be calculated.

Further, the four reflectors 7a to 7d are provided at predetermined positions below the flying vehicle 5, the plane 12 and the normal line 13 are calculated based on measurement results of the reflectors 7a to 7d, and a tilt of the flying vehicle 5 can be calculated based on the normal line 13. Further, based on a rotational displacement of the planes 12 adjacent in terms of time, a relative rotation angle of the flying vehicle 5 can be calculated. Therefore, even if the flying vehicle 5 has tilted, or even if the flying vehicle 5 has rotated, a measurement result of the laser scanner 6 can be corrected based on the calculated tilt and azimuth of the flying vehicle 5.

Further, in the present embodiment, by locally scanning and measuring the reflectors 7a to 7d sequentially, the flying vehicle system 2 is tracked. Further, in parallel with the tracking of the flying vehicle system 2, an attitude and an azimuth of the flying vehicle system 2 are calculated in real time.

Therefore, since a tilt sensor, an attitude detector, or an azimuth meter does not have to be provided on the flying vehicle system 2, the apparatus configuration can be simplified, a manufacturing cost can be reduced, and a weight of the flying vehicle system 2 can be decreased.

Further, by driving the propeller motors 15, since the flying vehicle 5 can be flown or rotated in a direction orthogonal to the projecting direction of the distance measuring light 72, since the cooperation between a rotation of the scanning mirror 26 and the flying or the rotation of the flying vehicle 5, the flying vehicle system 2 enables the irradiation of the distance measuring light 72 in an arbitrary direction. Therefore, even in case of acquiring the three-dimensional point cloud data, since mounting the uniaxial laser scanner on the flying vehicle system 2 can suffice, a reduction in weight and in manufacturing cost can be achieved.

Further, during the flying, since the flying vehicle camera image 73 is continuously acquired by the plurality of flying vehicle cameras 8 provided on the flying vehicle 5, the control of an attitude during the flying, the collision avoidance with respect to an obstacle and the like can be performed, the flying stability can improve.

Further, since a BLE (Bluetooth Low Energy) beacon as a positional information transmitter may also be provided on the flying vehicle system 2. The BLE beacon emits a rough positional information signal, even in a case where the tracking of the flying vehicle system 2 by the position measuring instrument 3 is interrupted by an obstacle or the like, for instance, the position measuring instrument 3 can easily return to the tracking of the flying vehicle system 2 based on the positional information from the BLE beacon.

It is to be noted that, in the present embodiment, the uniaxial laser scanner 6 is mounted on the flying vehicle 5 as a measuring instrument, and the three-dimensional point cloud data of the inspection surface 71 is acquired by the laser scanner 6. However, the measurement method performed by the flying vehicle system 2 is not limited the method of the present embodiment. For instance, a measuring instrument which irradiates the inspection surface 71 with a line laser and measures a surface shape of the inspection surface 71 using an optical cutting method may be provided on the flying vehicle 5. Further, a measuring instrument which irradiates the inspection surface 71 with electromagnetic waves in the THz (terahertz) band and measures the surface condition of the inspection surface 71 may be provided on the flying vehicle 5. By using the electromagnetic waves in the THz band, the flying vehicle system enables performing the in-wall gap inspection or the like with respect to the inspection surface 71.

Further, a flash lidar or a TOF camera may also be used as a measuring instrument. The flash lidar and the TOF camera are configured to pulse-irradiate a measurement range (an image pickup range) using a predetermined light source, receive a reflected light from the measurement range with an image pickup element such as a CMOS sensor, and perform the distance measurement for each pixel of the image pickup element. Therefore, by photographing the inspection surface 71 with the flash lidar or the TOF camera, the flying vehicle system enables acquiring an image of the inspection surface 71 having the distance information for each pixel, and hence a three-dimensional shape of the inspection surface 71 can be calculated based on the image.

On the other hand, in case of the flash lidar or the TOF camera, since the measurement range is restricted by a irradiation range of a pulsed light or a field angle of the camera, a plurality of images must be acquired while flying the flying vehicle system 2 along the inspection surface 71 in order to acquire an image of the entire inspection surface 71.

Therefore, in a case where the flash lidar or the TOF camera use as a measuring instrument, a flight route of the flying vehicle system 2 may be set in advance so that an image of the entire inspection surface 71 can be acquired, and the flying vehicle system 2 may be automatically flown based on the flight route. Alternatively, a measuring area of an arbitrary range may be set via the remote controller 4, and the flying vehicle system 2 may be automatically flown so that images of the entire measuring area can be acquired.

Further, an image acquiring area for acquiring images including at least a part of the inspection surface 71 may be set in advance, and the flying vehicle system 2 may be automatically flown so that the flying vehicle system 2 acquires images in the image acquiring area, and the flying vehicle system 2 may be automatically flown so that the flying vehicle system 2 acquires images sequentially until the image of the entire inspection surface 71 is acquired based on the acquired images. For instance, a flying direction is determined based on ridge lines and the like in images, and the flying vehicle system 2 is flown so that images to be acquired overlap by a predetermined amount. Further, the flying and the measurement of the flying vehicle system 2 may be manually performed via the remote controller 4 while referring to images of the flying vehicle cameras 8a to 8d.

Further, in the present embodiment, as the distance measuring light deflector using the distance measuring light 41 for a scan, the two axial MEMS mirror is used, but the invention is not restricted to the MEMS mirror. For instance, it is possible to adopt a configuration which performs a scan using the distance measuring light by various deflecting means such as a rotating mirror which rotates by a motor, a Galvano mirror, an optical phased array, the liquid crystal beam steering, a Risley prism or the like.

Further, in the present embodiment, as the reflectors 7a to 7d, the spheres having the reflective sheet affixed to the entire surfaces are used, but needless to say, omnidirectional prisms can be likewise used.

## Claims

1. A surveying system comprising: a flying vehicle system which is configured to perform a remote control and include a flying vehicle and a measuring instrument, a position measuring instrument configured to measure a position of said flying vehicle system, and a remote controller configured to control a flying of said flying vehicle system and to wirelessly communicate with said flying vehicle system and said position measuring instrument, wherein said remote controller is configured to fly said flying vehicle system to a desired structure, measure an object surface by said measuring instrument, and convert a measurement result of said object surface into a measurement result with reference to said position measuring instrument.

2. The surveying system according to claim 1, wherein said flying vehicle has at least three reflectors provided at known positions with respect to a reference point of said flying vehicle, said position measuring instrument includes a distance measuring module configured to project a distance measuring light, receive a reflected distance measuring light, and measure a distance to said reflectors, a distance measuring light deflector configured to deflect said distance measuring light in such a manner that a predetermined range is scanned with said distance measuring light, and an arithmetic control module configured to control said distance measuring module and said distance measuring light deflector, wherein said arithmetic control module is configured to sequentially perform a local scan including at least one of said reflectors using said distance measuring light with respect to each reflector by said distance measuring light deflector, and measure each reflector.

3. The surveying system according to claim 2, wherein said position measuring instrument further includes a measuring instrument main body having said distance measuring module, said distance measuring light deflector and said arithmetic control module, and a main body driving module configured to drive said measuring instrument main body in a horizontal direction and a vertical direction, wherein said arithmetic control module is configured to determine a position of one of said reflectors measured previously as a center, sequentially perform a local scan for measuring a current position of one of said reflectors with respect to each reflector, and track said flying vehicle system.

4. The surveying system according to claim 3, wherein said arithmetic control module is configured to set a position of each reflector measured at a standby position as an initial position, respectively, and start a tracking of said flying vehicle system based on a measurement result of each initial position.

5. The surveying system according to claim 3, wherein said arithmetic control module is configured to calculate a plane formed by a center of each reflector and a normal line of said plane based on said measurement result of each reflector and calculate an attitude and an azimuth of said flying vehicle system based on said plane and said normal line.

6. The surveying system according to claims 1, wherein said flying vehicle system further includes a flying controller, said measuring instrument is a uniaxial laser scanner, said laser scanner is configured to perform a one-dimensional scan using a distance measuring light having a wavelength different from a wavelength of said position measuring instrument via a scanning mirror, and said flying controller is configured to irradiate rotationally a three-dimension of said distance measuring light by a cooperation between a rotation of said scanning mirror and a rotation of said flying vehicle which rotates in a direction orthogonal to said scanning mirror and acquire three-dimensional point cloud data by a two-dimensional scan.

7. The surveying system according to claim 6, wherein said remote controller includes a terminal storage module in which a design data having a surface shape of a normal structure is stored and a terminal arithmetic processing module, and said terminal arithmetic processing module is configured to compare said three-dimensional point cloud data acquired by said laser scanner with said design data and detect a defect position in said structure based on a comparison result.

8. The surveying system according to claim 7, wherein said flying vehicle system further includes flying vehicle cameras and an infrared camera provided on a peripheral surface of said flying vehicle, and said terminal arithmetic processing module is configured to move said flying vehicle system to said defect position and acquire an image of said defect position by said flying vehicle cameras and said infrared camera.

9. The surveying instrument according to claim 8, wherein said plurality of flying vehicle cameras are provided, and said flying controller is configured to cause said flying vehicle cameras to acquire moving images or continuous images, extract each identical feature points in images adjacent to each other in terms of time, calculate a positional deviation between said feature points, and calculate a tilt angle, an azimuth angle, and a moving amount of said flying vehicle at the time of acquiring a subsequent image with respect to a preceding image based on said positional deviation.

10. The surveying system according to claim 4, wherein said arithmetic control module is configured to calculate a plane formed by a center of each reflector and a normal line of said plane based on said measurement result of each reflector and calculate an attitude and an azimuth of said flying vehicle system based on said plane and said normal line.

11. The surveying system according to claims 2, wherein said flying vehicle system further includes a flying controller, said measuring instrument is a uniaxial laser scanner, said laser scanner is configured to perform a one-dimensional scan using a distance measuring light having a wavelength different from a wavelength of said position measuring instrument via a scanning mirror, and said flying controller is configured to irradiate rotationally a three-dimension of said distance measuring light by a cooperation between a rotation of said scanning mirror and a rotation of said flying vehicle which rotates in a direction orthogonal to said scanning mirror and acquire three-dimensional point cloud data by a two-dimensional scan.

12. The surveying system according to claims 3, wherein said flying vehicle system further includes a flying controller, said measuring instrument is a uniaxial laser scanner, said laser scanner is configured to perform a one-dimensional scan using a distance measuring light having a wavelength different from a wavelength of said position measuring instrument via a scanning mirror, and said flying controller is configured to irradiate rotationally a three-dimension of said distance measuring light by a cooperation between a rotation of said scanning mirror and a rotation of said flying vehicle which rotates in a direction orthogonal to said scanning mirror and acquire three-dimensional point cloud data by a two-dimensional scan.

13. The surveying system according to claims 4, wherein said flying vehicle system further includes a flying controller, said measuring instrument is a uniaxial laser scanner, said laser scanner is configured to perform a one-dimensional scan using a distance measuring light having a wavelength different from a wavelength of said position measuring instrument via a scanning mirror, and said flying controller is configured to irradiate rotationally a three-dimension of said distance measuring light by a cooperation between a rotation of said scanning mirror and a rotation of said flying vehicle which rotates in a direction orthogonal to said scanning mirror and acquire three-dimensional point cloud data by a two-dimensional scan.

14. The surveying system according to claims 5, wherein said flying vehicle system further includes a flying controller, said measuring instrument is a uniaxial laser scanner, said laser scanner is configured to perform a one-dimensional scan using a distance measuring light having a wavelength different from a wavelength of said position measuring instrument via a scanning mirror, and said flying controller is configured to irradiate rotationally a three-dimension of said distance measuring light by a cooperation between a rotation of said scanning mirror and a rotation of said flying vehicle which rotates in a direction orthogonal to said scanning mirror and acquire three-dimensional point cloud data by a two-dimensional scan.

15. The surveying system according to claims 10, wherein said flying vehicle system further includes a flying controller, said measuring instrument is a uniaxial laser scanner, said laser scanner is configured to perform a one-dimensional scan using a distance measuring light having a wavelength different from a wavelength of said position measuring instrument via a scanning mirror, and said flying controller is configured to irradiate rotationally a three-dimension of said distance measuring light by a cooperation between a rotation of said scanning mirror and a rotation of said flying vehicle which rotates in a direction orthogonal to said scanning mirror and acquire three-dimensional point cloud data by a two-dimensional scan.

16. The surveying system according to claim 11, wherein said remote controller includes a terminal storage module in which a design data having a surface shape of a normal structure is stored and a terminal arithmetic processing module, and said terminal arithmetic processing module is configured to compare said three-dimensional point cloud data acquired by said laser scanner with said design data and detect a defect position in said structure based on a comparison result.

17. The surveying system according to claim 12, wherein said remote controller includes a terminal storage module in which a design data having a surface shape of a normal structure is stored and a terminal arithmetic processing module, and said terminal arithmetic processing module is configured to compare said three-dimensional point cloud data acquired by said laser scanner with said design data and detect a defect position in said structure based on a comparison result.

18. The surveying system according to claim 13, wherein said remote controller includes a terminal storage module in which a design data having a surface shape of a normal structure is stored and a terminal arithmetic processing module, and said terminal arithmetic processing module is configured to compare said three-dimensional point cloud data acquired by said laser scanner with said design data and detect a defect position in said structure based on a comparison result.

19. The surveying system according to claim 14, wherein said remote controller includes a terminal storage module in which a design data having a surface shape of a normal structure is stored and a terminal arithmetic processing module, and said terminal arithmetic processing module is configured to compare said three-dimensional point cloud data acquired by said laser scanner with said design data and detect a defect position in said structure based on a comparison result.

20. The surveying system according to claim 15, wherein said remote controller includes a terminal storage module in which a design data having a surface shape of a normal structure is stored and a terminal arithmetic processing module, and said terminal arithmetic processing module is configured to compare said three-dimensional point cloud data acquired by said laser scanner with said design data and detect a defect position in said structure based on a comparison result.
